# DEMANDE DE BREVET EUROPEEN

(11) **EP 0 712 813 A1**
(43) Date de publication de la demande: **22.05.1996**
(21) Numéro de dépôt: 95402539.1
(22) Date de dépôt: 14.11.1995
(51) Int. Cl.: C03C 8/14

(54) **Procédé d'émaillage de substrats en verre, composition d'émail utilisée et produits obtenus**

(30) Priorité: 21.11.1994 FR 9413912
(71) Demandeur: SAINT-GOBAIN VITRAGE, F-92400 Courbevoie (FR)
(72) Inventeur: Beyrle, André, F-60170 Tracy-le-Val (FR)
(74) Mandataire: Muller, René

(57) **Abrégé**

L'invention concerne une composition d'émail pour substrat en verre et son application.

La composition d'émail comprend une fritte de verre et des pigments dans un rapport en poids entre la fritte et les pigments compris entre 65/35 et 30/70 pour 100 parties de mélange fritte et pigments, avec au moins 10 parties de pigments qui ne modifient pas la chromaticité de la couche d'émail.

## Description

La présente invention concerne un procédé d'émaillage d'un substrat en verre notamment un vitrage, une composition d'émail utilisée dans ce procédé et les produits émaillés obtenus.

Les émaux pour substrat en verre sont bien connus de l'état de la technique. Ils sont utilisés pour former des couches sur des substrats en verre tels que des vitrages, en particulier des bordures, des couches décoratives, des couches de protection, notamment des couches de protection contre les rayonnements U.V pour les couches adhésives ou cordons adhésifs destinés au montage des vitrages dans les baies de carrosserie, ou encore pour le montage d'accessoires, par exemple de support de rétroviseur, ou encore comme masques pour des bandes collectrices de réseaux chauffants, etc...

Les émaux utilisés pour ces applications sont généralement employés sous forme d'une composition d'émail comprenant une poudre constituée essentiellement d'au moins une fritte de verre (matrice vitreuse) et de pigments en tant que colorants notamment, la fritte de verre et les pigments étant à base d'oxydes métalliques, et d'un médium ou «véhicule » permettant l'application de la composition d'émail sur le substrat et son adhésion temporaire avec celui-ci. Le médium choisi selon la destination de l'émail doit assurer une bonne mise en suspension des grains de fritte et de pigment utilisés et doit se consumer lors de la cuisson de l'émail. Ce médium peut comprendre des solvants, des diluants, des huiles, des résines, etc...

Pour pouvoir notamment remplir ses fonctions de masque et/ou de protection contre les rayonnements UV, une couche émaillée pour vitrage en verre doit présenter une opacité déterminée. Cette opacité peut être exprimée en terme de densité optique. Ainsi, lorsqu'il s'agit d'une couche émaillée destinée à protéger un cordon de collage, l'opacité désirée correspond à une densité optique au moins égale à 3. On mesure la densité optique avec un densitomètre, par exemple l'appareil GRETAG ^{R} D 200. La densité optique (DO) est reliée au facteur de transmission lumineuse T_{L} par la relation DO = log 1/T_{L} L'opacité est évidemment liée à l'épaisseur de la couche d'émail et actuellement les couches d'émail utilisées industriellement pour revêtir des vitrages doivent généralement présenter une épaisseur supérieure à environ 30 µm à l'état humide, c'est-à-dire après l'application de la couche sur le substrat et avant séchage et cuisson, pour assurer une densité optique au moins égale à 3. Une épaisseur humide de 30 µm, ce qui correspond approximativement à une épaisseur de 20 µm pour la couche après cuisson, doit être considérée comme importante pour une couche d'émail. Elle nécessite par conséquent l'utilisation d'une grande quantité d'émail et le coût en est élevé.

D'autre part, lorsqu'il s'agit de fabriquer un vitrage comportant des zones émaillées de densités optiques très différentes, l'une de l'autre, par exemple lorsqu'il s'agit d'un vitrage pour toit automobile devant présenter une zone centrale émaillée à motif tramé, et une bande périphérique émaillée de forte densité optique (DO > 3), il est généralement nécessaire pour réaliser l'émaillage d'utiliser au moins deux passes pour la réalisation de la couche d'émail lorsqu'on désire obtenir une bonne définition du motif tramé. Dans une première passe on réalise le dépôt de la couche d'émail au moins dans la zone centrale sous forme d'une couche mince présentant une trame très fine, par exemple à l'aide d'une première toile de sérigraphie d'un maillage de 120 T ce qui correspond à 120 fils/cm et une ouverture de maille de 45 µm environ, et dans une deuxième passe on réalise le dépôt de la bande périphérique plus épaisse en utilisant une deuxième toile de sérigraphie présentant par exemple un maillage de 61 T ce qui correspond à une ouverture de maille de 92 µm environ. Ce procédé qui utilise au moins deux passes pour le dépôt de la couche d'émail est long et donc coûteux car il nécessite deux postes de sérigraphie et deux séchages.

L'invention obvie aux inconvénients cités.

Elle propose une composition d'émail qui permet la fabrication d'une couche très opaque sous une faible épaisseur tout en utilisant les conditions de fabrication industrielles usuelles, en particulier en utilisant des températures de cuisson habituelles.

La composition d'émail selon l'invention comprend au moins une fritte de verre et des pigments, et cela avec un rapport en poids entre la fritte et les pigments compris entre 65/35 et 30/70 pour 100 parties de mélange fritte et pigments avec au moins 10 parties de pigments qui ne modifient pas de manière significative la chromaticité de la couche d'émail.

La chromaticité peut être caractérisée par les coordonnées colorimétriques désignées par les lettres a* et b*, ces coordonnées dérivant des coordonnées trichromatiques X, Y et Z définies et proposées en 1931 par la Commission Internationale de l'Eclairage (CIE), Commission unanimement reconnue comme organisme faisant référence en matière de colorimétrie. Le système de coordonnées L*, a*, b* (L* caractérisant la luminance), communément appelé CIELAB, a fait l'objet d'une recommandation officielle CIE en 1976 (Commission Internationale de l'Eclairage, Colorimetry-Recommandations Officielles - Publication CIE n° 15-2, Vienne, 1986) et est utilisé dans un grand nombre de secteurs industriels.

Selon l'invention, au moins 10 parties des pigments par rapport aux 100 parties de la fritte et des pigments n'altèrent ou ne modifient pas les valeurs a* et b* de façon significative.

Par rapport aux compositions d'émail connues pour substrats en verre la composition selon l'invention contient donc une teneur générale en pigments exprimée par rapport au mélange fritte-pigments bien supérieure aux teneurs usuelles. En dessous de 35 % de pigments par rapport au mélange fritte plus pigments, l'amélioration de l'opacité n'est pas très significative. Au delà de 70 % en pigments la composition ne se prête plus aux conditions habituelles de cuisson.

Avantageusement, le rapport en poids entre la fritte et les pigments est compris entre 50/40 et 40/60, c'est-à-dire avec un taux de pigments supérieur à 40 parties par rapport aux 100 parties fritte et pigments.

Cette haute teneur en pigments améliore de façon étonnante l'opacité des couches d'émail réalisées selon l'invention, par comparaison avec les couches connues, à épaisseurs égales.

Mais, cette haute teneur en pigment n'est possible selon l'invention que si au moins 10 parties des pigments sont des pigments qui n'altèrent pas de manière significative la chromaticité de la couche d'émail.

Cette amélioration de l'opacité autorise, sous un des aspects de l'invention, la fabrication de couches d'émail d'épaisseur plus faible. Comme le montreront les exemples décrit par la suite, il est possible selon l'invention de réduire sensiblement de moitié et plus l'épaisseur de la couche d'émail tout en conservant une opacité comparable à celle des couches connues.

La composition d'émail selon l'invention peut avantageusement être préparée à partir de compositions d'émail existantes ou à partir de composants de compositions d'émail existantes, tels que des frittes de verre. La préparation peut se faire en ajoutant des pigments aux compositions ou composants précédents, de façon à obtenir les proportions indiquées précédemment entre la fritte et les pigments avec au moins 10 parties en pigments qui n'affectent pas la chromaticité. L'invention n'implique pas nécessairement une reformulation complète des compositions d'émail employées, de même qu'elle n'implique pas de modifications des dispositifs de mise en oeuvre des procédés d'émaillage traditionnels.

La fritte de verre de la composition d'émail peut être toute fritte de verre connue à base d'oxydes choisis par exemple parmi les oxydes de silicium, de plomb, de zinc, de bismuth, de titane, de zirconium, de sodium, de bore, de lithium, de potassium, de calcium, d'aluminium, d'étain, de vanadium, de molybdène, de magnésium, etc...

L'augmentation de la teneur en pigments selon l'invention par rapport à une composition d'émail donnée peut influencer la température de fusion de la composition d'émail surtout lorsqu'il s'agit de très hautes teneurs en pigment. Il peut être alors avantageux de choisir des frittes à plus bas point de fusion de façon à retrouver les températures de fusion usuelles et ainsi à ne pas modifier le procédé industriel de cuisson de l'émail. Ainsi, sous un aspect de l'invention on utilise de préférence une fritte à point de fusion d'autant plus bas que le taux de pigments est élevé.

Il est à noter que la grande quantité de pigments utilisé selon l'invention n'affecte pas de manière conséquente les caractéristiques de résistance mécanique du substrat en verre revêtu .

Le médium présent dans la composition d'émail selon l'invention peut être tout médium habituellement utilisé dans les compositions d'émail connues. Il peut comprendre des solvants, des diluants, des huiles telles que des huiles de pin et autres huiles végétales, des résines telles que des résines acryliques, des fractions de pétrole, des matières filmogènes, etc...

Les pigments utilisés selon l'invention peuvent être choisis parmi les composés contenant des oxydes métalliques tels que des oxydes de chrome, des oxydes de cuivre, des oxydes de fer, des oxydes de colbalt, des oxyde de nickel.En ce qui concerne les pigments qui ne modifient pas la chromaticité, on choisira notamment des chromates de cuivre, des chromates de cobalt

Avantageusement la composition d'émail selon l'invention comprend au moins 5 % et de préférence au moins 20 % en poids de chromate de cuivre et/ou de cobalt, exprimé par rapport au poids fritte plus pigment de la composition.

De préférence, la composition d'émail contient au moins 30 % en poids de chromate de cuivre (spinelle).

Selon une caractéristique de l'invention, on choisit des pigments présentant une granulométrie déterminée. Ainsi, avantageusement, au moins 50 % des pigments présentent une granulométrie supérieure à 2,5 µm. et avec de préférence une granulométrie moyenne comprise entre 3 et 5 µm.

Dans le procédé d'émaillage de substrats en verre notamment de vitrages selon l'invention, la composition d'émail est déposée de préférence par sérigraphie sur les substrats, puis cuite, la cuisson s'opérant le cas échéant pendant le traitement thermique lié au bombage et/ou à la trempe des substrats, les températures de cuisson étant généralement de l'ordre de 600-700°C.

Le dépôt de la composition d'émail peut aussi se faire par pulvérisation, par enduction au rideau ou au rouleau, etc...

Le dépôt est suivi généralement d'un séchage.

La composition d'émail selon l'invention permet la fabrication de couches d'émail de forte opacité par rapport à l'épaisseur de la couche formée.

Ainsi, la couche d'émail peut présenter une densité optique supérieure à 3 pour des épaisseurs inférieures à 15 µm (en phase humide).

Ce très bon rapport opacité sur épaisseur de la couche permet notamment pour certaines applications de vitrage émaillé, la réalisation de couches émaillées en une seule passe alors qu'il était nécessaire d'utiliser au moins deux passes avec les compositions d'émail connues. Par exemple dans le cas d'un vitrage émaillé pour toit automobile qui doit présenter des valeurs d'opacité différentes selon les zones du vitrage, à savoir une zone centrale de faible opacité, par exemple de densité optique égale à 1, généralement formée d'une couche mince présentant une trame, et une zone périphérique de forte opacité, par exemple de densité optique supérieure à 3, il est possible avec la composition d'émail selon l'invention d'opérer le dépôt de la couche d'émail en une seule passe correspondant au dépôt d'une couche mince, cette passe unique permettant néanmoins l'obtention d'une opacité pour la zone périphérique répondant aux critères d'acceptation.

La très bonne opacité procurée par la composition d'émail selon l'invention dans l'application en tant que bande périphérique servant de masque au cordon de collage dans un vitrage, permet le cas échéant de supprimer l'opération de traitement bien connue, consistant en un revêtement par un primaire noir de la zone du vitrage devant recevoir le cordon de collage lors du montage du vitrage dans la baie de carrosserie automobile. Dans ce cas, on utilise de préférence une épaisseur conventionnelle, c'est-à-dire supérieure à 30 µm (à l'état humide).

La composition d'émail selon l'invention permet aussi d'obtenir une très bonne définition des motifs déposés par sérigraphie grâce à l'utilisation de toile de sérigraphie à mailles fines convenables pour de faibles épaisseurs de couche d'émail.

Elle permet une chute de luminance sans modification des valeurs a* et b*, c'est-à-dire qu'elle permet l'obtention d'une couleur noire intense sans apparition de chromaticité particulière.

En outre la composition selon l'invention procure une amélioration de l'aspect de surface de la couche cuite, avec une faible rugosité, ainsi qu'une amélioration des propriétés anti-adhésive (« anti-stick ») vis-à-vis notamment des outils de formage (trempe, bombage) tout à fait surprenante.

D'autres avantages et caractéristiques de l'invention apparaîtront dans la description suivante d'exemples de fabrication de vitrages émaillés utilisant les compositions d'émail selon l'invention.

### Exemple témoin 1

En vue de fabriquer un vitrage en verre trempé pourvu d'une bande émaillée périphérique on utilise une composition d'émail anti-adhésive (vis-à-vis des outils de formage) contenant une fritte de verre à base notamment de PbO, SiO₂ à raison de 65 parties et des pigments à base notamment de Fe₂O₃, Cr₂O₃, CO₃O₄, à raison de 34,5 parties pour 100 parties fritte plus pigments.

Cette composition est mélangée à un médium afin d'être déposée par sérigraphie sur un vitrage en verre pour former la bande périphérique émaillée. Le médium peut être tout médium connu et notamment un médium à base d'une résine et de solvant ou à base de composé acrylique polymérisable aux U.V. On dépose ainsi une couche de 35 µm d'épaisseur à l'état humide par utilisation d'une toile de sérigraphie à maille 90 T.

Après séchage, le vitrage est soumis à un traitement thermique à 680°C. Ce traitement thermique peut être celui lié au procédé de trempe. La cuisson de la bande émaillée est réalisée au cours de ce traitement thermique.

La couche émaillée finalement obtenue présente une épaisseur de 20 µm environ. A l'aide de l'appareil GRETAG ^{R} D 200, on mesure la densité optique de la partie émaillée du vitrage. La valeur est de 3,5.

### Exemple témoin 2

On opère de la même façon que dans l'exemple 1 sauf qu'on dépose une couche de 12,5 µm d'épaisseur à l'état humide à l'aide d'une toile à mailles 120 T. La densité optique finalement obtenue est de 2,7.

### Exemple 1

A la composition d'émail de l'exemple témoin 1, on ajoute 10 parties de pigments supplémentaires pour 100 parties fritte et pigments. Le pigment ajouté est du chromate de cuivre sous forme spinelle. Ce pigment n'altère pas la chromaticité d'origine de la couche d'émail. Le rapport fritte/pigment est alors de 59,5/40,5.

Après addition d'un médium, la composition d'émail est déposée sur le vitrage par sérigraphie à l'aide d'une toile 120 T pour former une couche de 12,5 µm d'épaisseur. Après cuisson, la densité optique de la partie émaillée du vitrage est de 3,3.

### Exemple 2

On opère comme dans l'exemple 1 sauf qu'on ajoute 20 parties de pigments (chromite de cuivre). Le rapport fritte/pigments est alors de 54,6/45,4.. On forme une couche d'émail de 11 µm d'épaisseur. La densité optique obtenue est de 3,7.

Comparé à l'exemple témoin 2, on peut noté que l'addition de 20 parties de pigments à permis d'obtenir une transmission TL environ dix fois plus faible.

### Exemple témoin 3

En vue de fabriquer un vitrage feuilleté pourvu d'une bande émaillée périphérique, on utilise une composition d'émail contenant une fritte de verre et des pigments dans les proportions suivantes exprimées en poids :
- PbO :: 50,5
- Cr₂O₃ :: 20,6
- SiO₂ :: 15,1
- CuO :: 9,4
- TiO₂ :: 1,5
- Co₃O₄ :: 1,2
- Na₂O :: 0,4
- ZnO :: 0,4
- Al₂O₃ :: 0,3
- Fe₂O₃ :: 0,3
- K₂O :: 0,3

La teneur en pigment calculée sur la base des oxydes métalliques Cr₂O₃, CuO, Co₃O₄, Fe₂O₃ est de 31,5 %. Le rapport fritte/pigments est donc de 68,5/31,5.

Après mélange avec un médium, la composition d'émail est déposée par sérigraphie sur une feuille de verre pour former une bande émaillée. On dépose ainsi une couche d'émail de 35 µm d'épaisseur à l'état humide à l'aide d'une toile de sérigraphie 61 T.

Après séchage, la feuille de verre revêtue de sa couche imprimée est associée à une seconde feuille de verre. L'ensemble est ensuite amené à un four de bombage par gravité. Au cours du cycle thermique lié au bombage s'opère la cuisson de l'émail à environ 600°C.

La densité optique mesurée sur la partie émaillée de feuille de verre est de 3,4.

### Exemple témoin 4

On opère comme dans l'exemple témoin 3 sauf qu'on réduit l'épaisseur de la couche d'émail à 25 µm en utilisant une toile 120 T.

La densité optique mesurée est de 2,4.

### Exemple 3

On ajoute à la composition d'émail de l'exemple témoin 3, 10 parties en poids de pigment. Le pigment utilisé est du chromate de cuivre dont la granulométrie est telle que 50 % des grains ont un diamètre supérieur à 3 µm. Le rapport fritte sur pigment est de 62/38. Ce pigment n'affecte pas la chromaticité de la couche d'émail.

On opère ensuite comme dans l'exemple témoin 4, en utilisant une toile de sérigraphie de 120 T pour former une couche d'émail de 24 µm d'épaisseur. Après traitement thermique, la densité optique est de 3,2.

### EXEMPLE 4

On opère comme dans l'exemple 3 sauf qu'on ajoute 18 parties de pigments (chromate de cuivre) à la composition de départ. Le rapport fritte/pigments est alors de 57,8/42,2.

Avec cette composition et après mélange avec un médium, on forme une bande émaillée de 24 µm d'épaisseur. Après traitement thermique, la densité optique est de 3,4.

### EXEMPLE 5

On mélange 50 parties d'une fritte à base de Pb₃O₄ et PbSiO₃, à bas point de fusion (480°C environ) avec 50 parties de pigments, essentiellement du chromate de cuivre.

Cette composition à un point de fusion d'environ 680°C. A l'aide d'une toile de sérigraphie 120 T on forme une couche d'émail qui après cuisson à 680°C présente une épaisseur de 10 µm. La densité optique est de 4,5.

Les exemples précédents mettent en évidence les bonnes caractéristiques, notamment en opacité, des compositions d'émail selon l'invention qui contiennent un taux de pigments plus élevé que les compositions connues, et avec au moins 10 parties de pigments qui n'altèrent pas la chromaticité de la couche d'émail.

## Revendications

1. Composition d'émail pour substrat en verre comprenant une fritte de verre et des pigments caractérisée en ce que le rapport en poids entre la fritte et les pigments est compris entre 65/35 et 30/70 pour 100 parties de mélange fritte et pigments, avec au moins 10 parties de pigments qui ne modifient pas la chromaticité de la couche d'émail.

2. Composition d'émail selon la revendication 1, caractérisée en ce que le rapport entre la fritte et les pigments est compris entre 60/40 et 40/60.

3. Composition d'émail selon une des revendications 1 ou 2, caractérisée en ce qu'elle contient au moins 5 % et de préférence au moins 20 % en poids de chromate de cuivre et/ou de cobalt en tant que pigment qui n'affectent pas la chromaticité.

4. Composition d'émail selon la revendication 3, caractérisée en ce qu'elle contient au moins 30 % en poids de chromate de cuivre.

5. Composition d'émail selon une des revendications 1 à 4, caractérisée en ce qu'au moins 50 % des pigments ont une granulométrie supérieure à 2,5 µm.

6. Composition d'émail selon une des revendications 1 à 5, caractérisée en ce que la fritte est une fritte à bas point de fusion.

7. Procédé pour l'émaillage d'un substrat en verre, notamment un vitrage, dans lequel on revêt au moins une partie du substrat en verre par une composition d'émail selon une des revendications 1 à 6 et on soumet le substrat émaillé à un traitement thermique assurant la cuisson de l'émail.

8. Procédé selon la revendication 7, caractérisé en ce que la couche de revêtement est formée par sérigraphie.

9. Substrat en verre émaillé obtenu par la mise en oeuvre du procédé selon une des revendications 7 à 8.

10. Substrat en verre émaillé selon la revendication 9, caractérisé en ce qu'il présente une densité optique supérieure à 3 pour une couche émaillée d'épaisseur inférieure à 15 µm (en humide).

11. Substrat en verre émaillé selon la revendication 9, caractérisé en ce qu'il présente au moins une zone émaillée à densité optique supérieure à 3 et au moins une zone émaillée tramée de haute définition et que ces différentes zones émaillées sont obtenues en une seule passe.
